# EUROPEAN PATENT APPLICATION

(11) **EP 4 293 863 A1**
(43) Date of publication of application: **20.12.2023**
(21) Application number: 22752329.7
(22) Date of filing: 10.02.2022
(51) Int. Cl.: H02J 7/00, H01M 10/44

(54) **BATTERY PACK, AND CHARGING AND DISCHARGING CONTROL METHOD FOR BATTERY PACK**

(30) Priority: 10.02.2021 CN 202110183948; 16.12.2021 CN 202111540306
(71) Applicant: Positec Power Tools (Suzhou) Co., Ltd., Suzhou, Jiangsu 215123 (CN)
(72) Inventor: SHEN, Feng, Suzhou, Jiangsu 215123 (CN); QIAN, Cheng, Suzhou, Jiangsu 215123 (CN); CHEN, Mingming, Suzhou, Jiangsu 215123 (CN); LV, Shaofeng, Suzhou, Jiangsu 215123 (CN)
(74) Representative: Dentons UK and Middle East LLP
(86) International application number: PCT/CN2022/075839
(87) International publication number: WO 2022/171169

(57) **Abstract**

The present application relates to the technical field of battery pack. Specially, disclosed a battery pack and a charging and discharging control method thereof. The battery pack comprises a first interface used for being detachably connected to an electrical device, and comprises a second interface used for being detachably connected to a 3C device. The battery pack further includes a switching module and a control module, and the control module measures the electrical device parameter of a device by means of the first interface and the 3C device parameter of a device by means of the second interface, connected to the second interface, controls the charging and discharging of the electrical device according to the electrical device parameter, and further controls the switching module according to the electrical device parameter and/or the 3C device parameter, so as to perform control to permit or prohibit charging and discharging of the 3C device. , When the devices both are accessed by means of the first interface and the second interface, the control module measures the device parameters of the devices accessed by means of the two interfaces, so that the first interface and the second interface of the battery pack achieve conditional discharging and charging, or simultaneous discharging, or simultaneous charging, thereby improving the using convenience, applicability and safety of the battery pack.

## Description

The present application claims the priority of Chinese Patent Application No. 202110183948.5 filed on February 10, 2021, and Chinese Patent Application No. 202111540306.2 filed on December 16, 2021, the entire content of which is incorporated herein by reference.

### BACKGROUND

### Technical Field

The present disclosure relates to the field of battery packs, and in particular, to a battery pack for power tools and a charging and discharging method of the battery pack.

### Related Art

In the field of power tools, the battery pack of power tools is usually only provided with an electrical device interface for supplying power to the power tools. However, applicable interfaces are single in form, and consequently the increasing charging demand of users for 3C devices cannot be met. With the continuous development of intelligent devices, the demand of people for 3C devices is increasing, and the 3C devices usually have the defects of fast power consumption and short endurance. Therefore, the design of providing a 3C device interface on the battery pack of power tools provides convenience for users using the tool.

The bi-directional interface characteristics of USB Type-C interfaces and its excellent data transmission characteristics, high stability and other characteristics make the 3C interface represented by the USB Type-C interface gradually become the mainstream power supply/data cable for the 3C devices, and it will also become the preferred smart device interface that can be provided on the battery pack of power tools.

However, even for battery packs provided with both electrical device interfaces and 3C device interfaces, considering factors such as safety, endurance, charging and discharging power, and the like, the electrical device interface and the 3C device interface cannot operate at the same time, causing inconvenience in use, and low applicability.

### SUMMARY

In order to overcome the defects in the prior art, the present disclosure provides a battery pack, which is detachably connectable to the external device to be charged or to discharge. The battery pack comprising:
a cell set;
a first interface, configured to be detachably connectable to an electrical device;
a second interface, configured to be detachably connectable to a 3C device; and
a switch module, electrically connected between the cell set and the second interface of the battery pack;
further comprising a control module, wherein the control module is configured to,
detect an electrical device parameter of the electrical device connected to the first interface, and detect 3C device parameter of the 3C device connected to the second interface;
control the operation of the first interface according to the electrical device parameter, and control to permit the operation of the second interface according to the electrical device parameter and/or the 3C device parameter; wherein
the control module controls the switch module to permit the operation of the second interface.

In one of embodiments, the switch module comprises a first switch module, the first switch module comprises a switch element and a switch driving circuit; the switch driving circuit is electrically connected between the control module and the switch element, and the control module controls the switch driving circuit to drive the conducting of the switch element to permit the operation of the second interface, or controls the switch driving circuit to drive the interrupting of the switch element to prohibit the operation of the second interface.

In one of embodiments, the control module is configured to determine a device type of the electrical device according to the electrical device parameter, and the electrical device comprises a powered device and a charging device in terms of the device type;
when the control module determines that the electrical device is the power device, the control module controls the cell set to supply power to the power device through the first interface; and
when the control module determines that the electrical device is the charging device, the control module controls to charge the cell set by the charging device through the first interface.

In one of embodiments, the power device comprises a high-power power device and a low-power power device; and
the control module is further configured as,
detect the electrical device parameter of the electrical device connected to the first interface;
when the control module determines that the powered device is the high-power powered device, the control module controls the switch module to prohibit the operation of the second interface; and
when the control module determines that the powered device is the low-power powered device or the charging device, the control module controls the switch module to permit the operation of the second interface.

In one of embodiments, the control module is further configured to determine a device type of the 3C device according to the 3C device parameter, and the 3C device at least comprises a 3C load device and a 3C charging device in terms of the device type. In one of embodiments, when the control module determines that the electrical device is the low-power power device,
and when the control module determines that the 3C device is the 3C load device, the control module controls the switch module to permit the cell set to supply power to the 3C load device through the second interface; and
when the control module determines that the 3C device is the 3C charging device, the control module controls the switch module to permit to charge the cell set by the 3C charging device through the second interface.

In one of embodiments, the 3C device at least comprises a 3C load device and a 3C charging device in terms of the device type, and the control module is further configured to determine a device type of the 3C device according to the 3C device parameter;
when the control module determines that the electrical device is the charging device,
and when the control module determines that the 3C device is the 3C load device, the control module controls the switch module to permit the cell set to supply power to the 3C load device through the second interface.

In one of embodiments, when the control module determines that the 3C device is the 3C charging device, the control module is configured to:
detect a first charging current for the cell set from the charging device connected to the first interface, and a second charging current for the cell set from the 3C charging device connected to the second interface;
when the control module determines that a sum of the first charging current and the second charging current is higher than a maximum charging current threshold of the cell set, the control module controls to interrupt the switch module to prohibit the 3C charging device from charging the cell set through the second interface; and
when the control module determines that the sum of the first charging current and the second charging current is not higher than the maximum charging current threshold of the cell set, the control module controls to conduct the switch module to permit the 3C charging device to charge the cell set through the second interface.

In one of embodiments, the electrical device parameter at least comprise parameter characterizing the type of the electrical device, and the parameter characterizing the type of the electrical device at least comprise terminal setting parameter, device type, voltage, current, temperature, power, and change rate of electrical parameter.

In one of embodiments, the control module determines the device type of the electrical device according to the parameter characterizing the type of the electrical device; and
when the control module determines that the electrical device is the power device, the control module is configured to determine that the power device is the high-power power device when at least one parameter of the electrical device parameter is determined to be not less than a preset threshold.

In one of embodiments, the electrical device parameter comprise a parameter characterizing the type of the electrical device, such as terminal setting parameter, device type, voltage, current, temperature, power, and change rate of electrical parameter.

In one of embodiments, the first interface comprises power supply terminals and at least one communication terminal, and the communication terminal is used for communication between the control module and the electrical device.

In one of embodiments, the battery pack communicates with the electrical device by means of digital communication and/or analog communication.

In one of embodiments, the battery pack further comprises a second interface control circuit, which is connected in series between the control module and the second interface, and configured to detect the 3C device parameter of the 3C device connected to the second interface and transmit the 3C device parameter to the control module, or receive a control signal of the control module to control charging and discharging of the second interface.

In one of embodiments, the switch module further comprises a second switch module, which is electrically connected between the second interface control circuit and the second interface, and configured to receive a control signal of the second interface control circuit to control the operation of the second interface.

In one of embodiments, the second interface is a USB Type-C interface, and the second interface control circuit communicates with the control module by means of UATR or I2C.

The present disclosure further provides a charging and discharging control method of a battery pack, the battery pack comprising: a cell set; a first interface, configured to be detachably connectable to an electrical device; a second interface, configured to be detachably connectable to a 3C device; and a switch module, electrically connected between the cell set and the second interface of the battery pack; wherein the method comprises the following steps:
detecting an electrical device parameter of the electrical device connected to the first interface;
detecting a 3C device parameter of the 3C device connected to the second interface;
controlling the operation of the first interface according to the electrical device parameter; and
controlling the switch module to permit the operation of the second interface according to the electrical device parameter and/or the 3C device parameter.

In one of embodiments, the step of controlling the operation of the first interface according to the electrical device parameter comprises:
determining a device type of the electrical device according to the electrical device parameter, wherein the electrical device comprises a power device and a charging device in terms of the device type;
when the electrical device is determined to be the power device, controlling the cell set to supply power to the power device through the first interface; and
when the electrical device is determined to be the charging device, controlling to charge the cell set by the charging device through the first interface.

In one of embodiments, the power device comprises a high-power power device and a low-power power device; and the step of controlling the operation of the first interface according to the electrical device parameter further comprises:
When the electrical device is determined to be the high-power power device according to the electrical device parameter,
interrupting the switch module to prohibit the operation of the second interface; and
when the electrical device is determined to be the low-power power device or the charging device, conducting the switch module to permit the operation of the second interface.

In one of embodiments, after the step that when the electrical device is determined to be the power device, controlling the cell set to supply power to the power device through the first interface, the control method further comprises:
determining that if the electrical device is the high-power power device according to the electrical device parameter,
when the electrical device is determined not to be the high-power power device, detecting the 3C device parameter of the 3C device connected to the second interface; and determining a device type of the 3C device according to the 3C device parameter, wherein the 3C device at least comprises a 3C load device and a 3C charging device in terms of the device type.

In one of embodiments, the step of controlling the switch module to select to permit the operation of the second interface according to the electrical device parameter and/or the 3C device parameter comprises:
when the electrical device is determined to be the low-power power device, and
when the 3C device is determined to be the 3C load device, conducting the switch module to permit the cell set to supply power to the 3C load device through the second interface; and
when the 3C device is determined to be the 3C charging device, conducting the switch module to permit to charge the cell set by the 3C charging device through the second interface.

In one of embodiments, the step of controlling the switch module to select to permit the operation of the second interface according to the electrical device parameter and/or the 3C device parameter comprises:
when the electrical device is determined to be the charging device,
detecting the 3C device parameter of the 3C device connected to the second interface; determining a device type of the 3C device according to the 3C device parameter; and
when the 3C device is determined to be the 3C load device, conducting the switch module to permit the cell set to supply power to the 3C load device through the second interface.

In one of embodiments, the step of controlling the switch module to select to permit the operation of the second interface according to the electrical device parameter and/or the 3C device parameter comprises:
when the electrical device is determined to be the charging device, and
when the 3C device is determined to be a 3C charging device according to the 3C device parameter,
detecting a first charging current for the cell set from the charging device connected to the first interface, and a second charging current for the cell set from the 3C charging device connected to the second interface;
when a sum of the first charging current and the second charging current is determined to be higher than a maximum charging current threshold of the cell set, interrupting the switch module to prohibit the 3C charging device from charging the cell set through the second interface; and
when the sum of the first charging current and the second charging current is determined to be not higher than the maximum charging current threshold of the cell set, conducting the switch module to permit the 3C charging device to charge the cell set through the second interface.

In one of embodiments, the electrical device parameter at least comprise a parameter characterizing the type of the electrical device, and the parameter characterizing the type of the electrical device at least comprise terminal setting parameter, device type, voltage, current, temperature, power, and change rate of electrical parameter.

In one of embodiments, the charging and discharging control method further comprises:
determining the device type of the electrical device according to the parameter characterizing the type of the electrical device; and
when the electrical device is determined to be the power device,
when at least one parameter of the electrical device parameter is not less than a preset threshold, determining that the power device is the high-power power device.

In one of embodiments, before the step of detecting electrical device parameter of the first interface and/or detecting 3C device parameter of the 3C device at the second interface, the charging and discharging control method further comprises:
detecting a connecting state of the first interface and/or the second interface, and if it is determined that a device is connected to the first interface and/or the second interface, acquiring the corresponding electrical device parameter and/or 3C device parameter of the device connected to the first interface and/or the second interface.

According to the above battery pack, through detecting electrical device parameter of an electrical device connected to a first interface of the battery pack and detecting 3C device parameter of a 3C device connected to a second interface of the battery pack, charging and discharging of the first interface is controlled according to the electrical device parameter, and a switch module is controlled according to the electrical device parameter and/or the 3C device parameter to permit or prohibit the operation of the second interface. In other words: when different devices are connected to the first interface and the second interface of the battery pack, through detecting the device parameter of the electrical device connected to the first interface and the 3C device connected to the second interface, and according to the device parameter, controlling the charging and discharging of the electrical device and controlling the performance of permitting or prohibiting the charging and discharging of the 3C device, in a specific condition, the two interfaces of the battery pack are enabled to achieve safe and efficient discharging while charging, or simultaneous discharging, or simultaneous charging, so that the operation requirement that a user can use the two interfaces at the same time is met, which not only improves the safety performance, but also effectively improves the using convenience and applicability of the battery pack.

### BRIEF DESCRIPTION OF THE DRAWINGS

The above-described objectives, technical solutions, and beneficial effects of the present disclosure can be clearly obtained by the following detailed description of specific embodiments capable of realizing the present disclosure, in combination with the description of the accompanying drawings.

The same reference numerals and symbols in the accompanying drawings as well as in the specification are used for representing the same or equivalent elements.
FIG. 1 is a schematic view of a first preferred embodiment of a battery pack provided in Embodiment I of the present application;
FIG. 2 is a top view of the battery pack shown in FIG. 1;
FIG. 3 is a schematic view of the battery pack shown in FIG. 1 in cooperation with an electrical device;
FIGS. 4-5 are schematic views of the battery pack shown in FIG. 1 in cooperation with a 3C device;
FIG. 6 is a schematic view of a functional module of the battery pack provided in Embodiment I of the present application;
FIG. 7 is a schematic view of a functional module of the battery pack provided in Embodiment I of the present application;
FIG. 8 is a schematic view of a functional module of the battery pack provided in Embodiment I of the present application;
FIG. 9a is a schematic view of a functional module of the battery pack provided in Embodiment I of the present application;
FIG. 9b is a schematic view of a functional module of the battery pack provided in Embodiment I of the present application;
FIG. 10 is a schematic view of a functional module of the battery pack provided in Embodiment I of the present application;
FIG. 11 is a schematic view of a functional module of the battery pack provided in Embodiment I of the present application;
FIG. 12 is a schematic view of the battery pack provided in Embodiment I of the present application in cooperation with an electrical device;
FIG. 13 is a schematic view of another battery pack provided in Embodiment I of the present application in cooperation with an electrical device;
FIG. 14 is a flow block diagram of a charging and discharging control method of a battery pack provided in Embodiment II of the present application; and
FIG. 15 is a flow block diagram of a specific example of the charging and discharging control method of a battery pack provided in Embodiment II of the present application.

### DETAILED DESCRIPTION

To help understand the present disclosure, the following describes the present disclosure more fully with reference to the related accompanying drawings. The accompanying drawings show preferred implementation modes of the present disclosure. However, the present disclosure may be implemented in many different forms, and is not limited to the implementation modes described herein. On the contrary, the implementation modes are provided to make a more thorough understanding of the disclosed content of the present disclosure more comprehensive.

It is to be noted that in the present disclosure, unless otherwise expressly provided and limited, the terms "first", "second", and the like may be used herein to describe various elements, but these elements are not limited by these terms, these terms are used only for distinguishing a first element from another element and are not to be understood as indicating or implying relative importance or implicitly specifying the number of technical features indicated. Unless otherwise expressly provided, a person of ordinary skill in the art may understand the specific meanings of the foregoing terms in the present disclosure according to specific situations.

Unless otherwise defined, meanings of all technical and scientific terms used herein are the same as that usually understood by a person skilled in the technical field to which the present disclosure belongs. Herein, terms used in this specification of the present disclosure are merely intended to describe objectives of the specific embodiments, but are not intended to limit the present disclosure. As used herein, the term "and/or" includes any and all combinations of one or more of the relevant listed items.

As mentioned in the background, in order to enable the battery pack of power tools to meet the increasing demand of users for power supply to 3C devices, 3C interfaces, such as USB interfaces, are generally provided on the battery pack, or power is supplied to the 3C devices through adapters/adapter bases. When both an electrical device interface and the 3C device interface on the battery pack are plugged with devices, only one of the interfaces is normally used, e.g., charging or discharging one of the interfaces while disabling the other one; or has no control on the two interfaces. For example, currently, there are mainly the following several scenarios.

Scenario 1: both the electrical device interface and the 3C device interface are connected to power devices. In this case, considering the limited capacity of the battery pack, the power supply parameter of the electrical device interface and the 3C device interface are different, and the power requirements of the connected devices are also different, so there is a problem of inconsistent discharge parameter. In addition, during the operation of the electrical device under actual operating conditions, a motor needs to frequently start and stop, and a huge reverse electromotive force is generated in an electric circuit at the instant when the motor starts and stops, which will have an impact on circuit elements in a functional circuit connected to the 3C device interface in the battery pack, resulting in irreversible damage, and there is a greater safety risk. Therefore, considering the discharge parameter and safety and other factors, the battery pack will disable the power output of the 3C device interface when supplying power to the electrical device, or prohibit the supply of power to the electrical device when supplying power to the 3C device interface, which results in that the user is unable to supply power to both the electrical device and the 3C device at the same time, and the practicality is low.

Scenario 2: the electrical device interface and the 3C device interface are respectively connected with a charging device and a power device. In this case, for a cell set, especially when the cell set of the battery pack is on the high side of power output, discharging while charging is likely to cause greater damage to the cell set. Therefore, considering the service life, endurance and other issues of the battery pack, it is usually set to only permit the charging device to charge the battery pack or only permit the battery pack to discharge to the power-using device, i.e., discharging while charging of the battery pack is prohibited.

Scenario 3: both the electrical device interface and the 3C device interface are connected with charging devices. The battery pack of power tools is usually charged only through the electrical device interface, and the introduction of the 3C device interface makes it possible to charge the battery pack of power tools with the 3C charging device. However, the parallel arrangement of the two interfaces results in superposition of the charging current, which is likely to cause an excessive charging current and a safety hazard of an over-current, and therefore it is impossible to charge the battery pack through the two interfaces at the same time.

Combined with the several scenarios listed above, it can be seen that at present, the use of the battery pack of power tools, which is provided with the 3C device interface, is still inconvenient to use, and the safety of use is low.

Based on the above problems, the present application provides a battery pack and a charging and discharging control method of a battery pack for controlling the charging and discharging process of a battery pack having an electrical device interface and a 3C device interface, so as to improve the using convenience and safety of the battery pack.

### Embodiment I

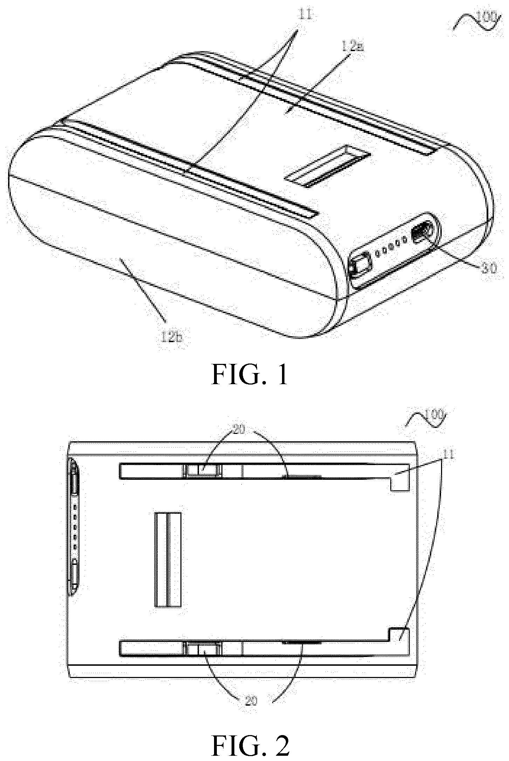

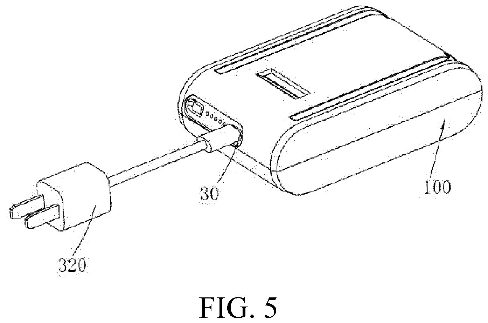

FIGS. 1-5 show a battery pack 100 of a first preferred embodiment provided by the present disclosure. The battery pack 100 includes a housing 12, a cell set 10, a first interface 20, and a second interface 30.

The housing includes an upper housing 12a and a lower housing 12b. Two parallel guide rails 11 are provided on a top surface of the upper housing. The guide rail 11 cooperates with a slide groove in an electrical device, so that the battery pack can slide smoothly along the slide groove to a suitable position on the electrical device to achieve matching with the electrical device. The second interface is provided within the guide rail.

In one of embodiments, the guide rail may also be provided on a side surface or a bottom surface of the housing. The second interface may be provided within the guide rail or outside the guide rail.

The cell set 10 is provided in the housing of the battery pack 100, and the cell set 10 includes a plurality of electrically connected cells 11. The number of the cells 11 and the series and parallel connection method between the cells are not specifically limited herein. For example, the cells 11 may be connected in series or in parallel, or connected in series and in parallel to form the cell set 10.

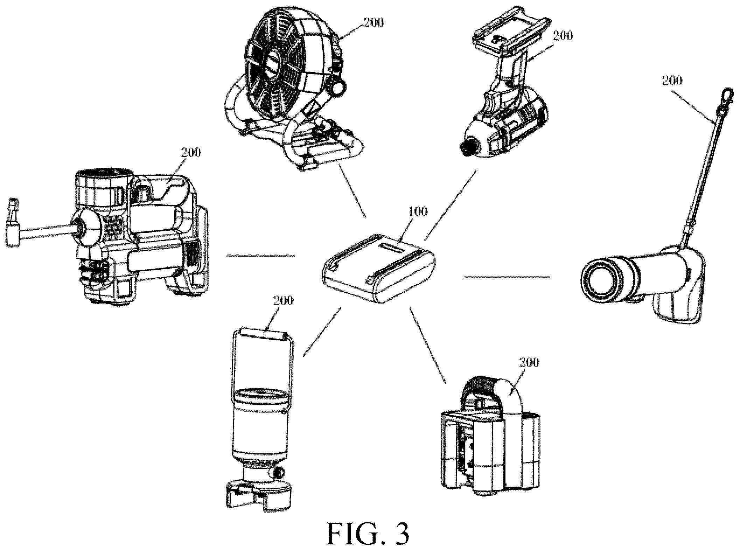

The first interface 20 and the second interface 30 are provided on the housing, and the first interface 20 is configured to enable the battery pack 100 to be detachably connectable with an electrical device 200, and the electrical device 200 includes a power device 210 and a charging device 220. Optionally, the power device 210 is an electrical device that can be connectable with the battery pack 100 through the first interface 20, and the power device 210 is provided with an interface structure matched with the battery pack 100. The above-described power device may include power tools for gardens such as lawn mowers, grass trimmers, and blowing and sucking machines, hand-held power tools such as hammer drills, angle grinders, saws, nail guns, and drill bits, simple household small power tools such as vacuum cleaners, glue guns, scissors, soldering irons, fans, flashlights, camping lamps, and air pumps that are daily used in families, as well as a variety of electrical devices that may be powered by the battery pack 100. FIG. 3 shows a schematic view of the battery pack 100 capable of being directly disassembled from and connected with part of the electrical device 200 through the guide rail, and when the first interface 20 of the battery pack matches with an interface of the electrical device 200, the battery pack can be directly connected to the electrical device 200 for the charging or discharging operation, thereby improving the universality and adaptability of the battery pack.

The charging device 220 is connected to the battery pack 100 to charge the battery pack through the first interface 20, and the charging device 220 is provided with an interface structure correspondingly matched with the first interface 20 of the battery pack 100, so that the charging device 220 is able to connect the battery pack 100 and charge the battery pack 100 through the matched interface. For the power device 210 and the charging device 220 enumerated herein, no specific limitation is made herein.

The second interface 30 is configured to enable the battery pack 100 to be detachably connectable to a 3C device 300.

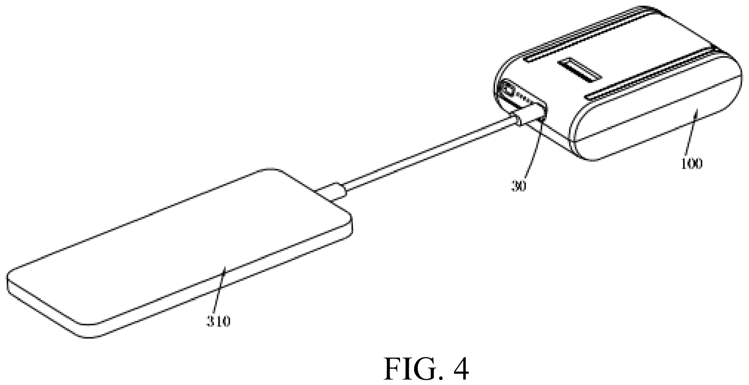

The 3C device 300 at least includes a 3C load device 310 and a 3C charging device 320, as shown in FIGS. 4-5, the battery pack 100 is capable of supplying power to the 3C load device 310 through the second interface 30, or the battery pack 100 may be charged by the 3C charging device 320 through the second interface 30.

The 3C load device may include, but is not limited to, a variety of electronic devices that support the 3C interface, such as tablet personal computers, cell phones, portable computers, and cameras, and may also include other devices that support power supply through the 3C interface, such as power tools. In addition, the 3C charging device 320 is usually provided with an interface structure correspondingly matched with the second interface 30 of the battery pack 100, and is usually understood to be a charger provided with a 3C interface and can charge the 3C load device through the 3C interface.

Specifically, the 3C interface is generally understood to be a variety of types of 3C interfaces such as a USB interface, a USB Type A/B/C interface, a micro-A interface, a micro-B interface, a mini-A interface, and a mini-B interface, which are commonly used for the electronic device. For the 3C load device, 3C charger and 3C interface enumerated above herein, no specific limitation is made herein, nor are they limited to the items enumerated above.

It can be understood that the first interface 20 and the second interface 30 and the corresponding connectable devices may be electrically connected by means of electrode plates or other conductive connectors.

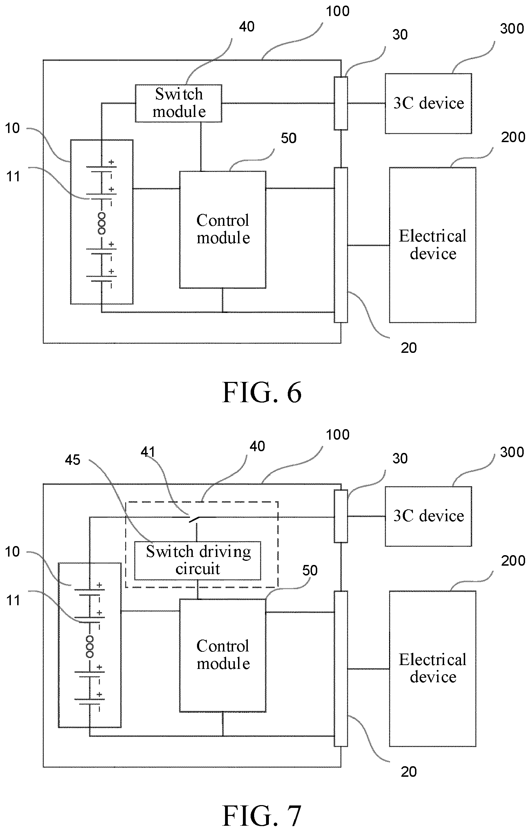

As shown in FIG. 6, the battery pack 100 further includes a switch module 40. The switch module 40 is electrically connected between the cell set 10 and the second interface 30 for controlling the on-off of an electrical pathway between the cell set 10 and the second interface 30. Specifically, when the switch module 40 is conducted, the electrical pathway from the cell set 10 to the second interface 30 is connected; and when the switch module 40 is interrupted, the electrical pathway from the cell set 10 to the second interface 30 is interrupted.

The above-described battery pack 100 further includes a control module 50, and the control module 50 is used for controlling the charging and discharging of the two interfaces according to device parameter of the devices connected to the first interface 20 and the second interface 30.

Specifically, firstly, the control module 50 detects electrical device parameter of the electrical device 200 connected to the first interface 20, and detects 3C device parameter of the 3C device 300 of the second interface 30. Further, the control module 50 controls the operation of the first interface 20 according to the electrical device parameter, and performs to permit or prohibit the operation of the second interface 30 according to the electrical device parameter and/or the 3C device parameter. The control module 50 achieves control over permitting or prohibiting the operation of the second interface 20 by controlling the switch module 40.

It can be understood that the electrical device parameter detected by the control module 50 vary when different electrical devices 200 are connected to the first interface 20, and the control module 50 may determine information such as the hardware setup state, the operating state, and the device operating parameter of the electrical device 200 according to the detected electrical device parameter, and control the operation of the battery pack 100 and the electrical device 200 according to the electrical device parameter. Similarly, when different 3C devices 300 are connected to the second interface 30, the 3C device parameter detected by the control module 50 vary.

As a result, the control module can timely and accurately control the charging and discharging of the battery pack to an external device through the first interface 20 and/or the second interface 30 according to the electrical device parameter and the 3C device parameter of the devices connected to the first interface 20 and/or the second interface 30, so that the battery pack 100 can control the first interface 20 and the second interface 30 to operate at the same time in a safe and controllable manner, which satisfies the user's demand for simultaneous operation of the two interfaces, improving the safety, applicability and application scenarios of the battery pack 100.

It is to be noted that when any electrical device 200 is connected to the battery pack 100 through the first interface 20, or any 3C device 300 is connected to the battery pack through the second interface 30, in other words., when only one external device is connected to the battery pack 100, the external device is permitted to operate under the normal operation of the battery pack 100. Based on this, the battery pack 100 may be not only used alone as a battery pack for power tools, but also may be used as a portable charger to supply power to the 3C device, or may be charged directly by a 3C charger, which is highly versatile.

In the prior art, since the first interface 20 and the second interface 30 are not controlled for charging and discharging, the simultaneous operation of the first interface 20 and the second interface 30 may cause certain safety problems, therefore, in embodiments provided by the present disclosure, the control module 50 detects the electrical device parameter of the electrical device 200 connected to the first interface 20 and/or the 3C device parameter of the 3C device 300 connected to the second interface 30 of the battery pack 100, controls the charging and discharging of the first interface 20 according to the electrical device parameter, and controls the switch module 40 to control to permit or prohibit the charging and discharging of the second interface 30 according to the electrical device parameter and/or the 3C device parameter. Thus, under the premise of ensuring the safety performance of the battery pack 100, the first interface 20 and the second interface 30 are enabled to operate simultaneously, which is highly practical and convenient.

Specifically, referring to FIG. 7, the switch module 40 includes a switch element 41 and a switch driving circuit 45. The switch driving circuit 45 is connected in series between the control module 50 and the switch element 41, and the switch element 41 is connected in series between the cell set 10 and the second interface 30. Under predetermined conditions, the control module 50 generates control signals to control the switch driving circuit 45 to drive the switch element 41 to be conducted or interrupted such that when the switch element 41 is conducted, the electrical pathway from the cell set 10 to the second interface 30 is connected, in other words, the charging and discharging of the second interface 30 is permitted. Conversely, when the switch element 41 is interrupted, the electrical pathway from the cell set 10 to the second interface 30 is interrupted, in other words, the charging and discharging of the second interface 30 is prohibited.

The switch element 41 may be, but is not limited to, an MOS transistor switch, a relay switch, an IGBT switch, and the like, and the switch driving circuit 45 is provided corresponding to the switch element 41 and may be, but is not limited to, an MOS transistor switch driving circuit, a relay switch driving circuit, an IGBT switch driving circuit, and the like.

In one of the embodiments, the control module 50 performs cyclic detection on the first interface 20 in real time. When the control module 50 detects that the electrical device 200 is connected to the first interface 20, the moment when the electrical device 200 contacts the electrode plate of the first interface 20, the magnitude of the voltage at the electrode plate is changed, which is able to activate the control module 50, and a closed loop of power supply to the control module 50 is formed through a self-locking circuit, thereby realizing continuous power supply to the control module. The self-locking circuit is a technical means commonly used by those skilled in the art, and will not be specifically described herein.

It can be understood that the control module 50 detects the second interface 30 in real time as well, and also has the effect of activating the control module 50 when there is a device connected to the second interface 30, referring to the description in the previous paragraph for details.

It can be noted that the battery pack 100 is usually provided with an indicating apparatus such as a power indicator light, and a lighting lamp, which is illuminated or turned off by pressing or touching a corresponding button provided on the battery pack 100, and the operation of pressing or touching the button herein is also a realizable way to activate the control module to form a self-locking circuit. Activating the control module may be achieved in a number of ways, such as pressing or touching a button, wireless communication, radio frequency induction, and sensor induction.

The control module 50 enters an operating state after being activated and powered up, acquires the electrical device parameter of the electrical device 200 at the first interface 20, and determines a device type of the electrical device 200 according to the electrical device parameter.

Further, the control module 50 is configured to determine the device type of the electrical device according to the electrical device parameter; when the control module 50 determines that the power device 210 is connected to the first interface 20, the cell set 10 discharges to the power device through the first interface 20; and when the control module 50 determines that the charging device 220 is connected to the first interface 20, the cell set 10 is charged by the charging device 220 through the first interface 20.

Further, the power device 210 includes a high-power power device 211 and a low-power power device 214. As is well-known, each power device is preset with rated electrical device parameter such as rated power, rated current, rated voltage, and rated temperature, has electrical device parameter during actual operation such as operating power, operating current, operating voltage, operating temperature, and change rate of electrical parameter, and has other electrical device parameter including hardware setting, device type, and the like. By means of the above-described parameter characterizing the type of the electrical device, the power device 210 can be specifically divided into the high-power power device 211 and the low-power power device 214, and different charging and discharging control strategies can be used.

In one of the embodiments, the power device 210 is connected to the first interface 20 of the battery pack 100; the control module 50 detects the electrical device parameter of the power device 210 and determines whether the mated power device 210 is the high-power power device 211 according to the electrical device parameter. If it is determined that the connected electrical device 210 is the high-power power device 211, the control module 50 generates a prohibiting command to control the switch module 40 to be interrupted to interrupt the electrical pathway of the cell set 10 and the second interface 30, thereby prohibiting the charging and discharging operation of the second interface 30.

Correspondingly, if the control module 50 determines that the connected electrical device 210 is the low-power power device 214 or the charging device 220, the control module 50 generates a permitting command to control the switch module 40 to be conducted to connect the electrical pathway of the cell set 10 and the second interface 30, thereby permitting the charging and discharging operation at the second interface 30. In one of the embodiments, the control module 50 detects the 3C device parameter of the 3C device at the second interface 30 and determines a device type of the 3C device 300 according to the 3C device parameter. The 3C device 300 at least includes a 3C load device and a 3C charging device in terms of the device type.

In one of the embodiments, when the control module 50 determines that the connected electrical device 210 is not a high-power tool according to the electrical device parameter, for example, when the control module 50 determines that the low-power power device 214 is connected, and the 3C load device is connected to the second interface 30, the control module 50 generates a permitting command to control the switch module 40 to be conducted to connect the electrical pathway of the cell set and the second interface 30, thereby permitting the cell set 10 to supply power to the 3C load device through the second interface 30. Correspondingly, when it is determined that the 3C charging device is connected to the 3C device 30, the control module 50 generates a permitting command, thereby permitting the 3C charging device to charge the cell set 10 through the second interface 30. It is thereby achieved that, under the condition that the first interface 20 is connected with the low-power power device 214, the control module 50 controls to permit the charging and discharging operation of the second interface 30, which improves the safety performance and using convenience of the battery pack 100.

In this embodiment, when the control module 50 determines that a non-high-power power device is connected to the first interface 20, i.e., when the low-power power device 214 or the 3C charging device 320 is connected, the charging and discharging operation of the second interface 30 is permitted, making it possible for the first interface 20 and the second interface 30 to operate simultaneously. When the non-high-power power device, i.e., the low-power power device 214 or the 3C charging device 320 operates, firstly, the control module 50 determines the device type of the 3C device connected to the second interface 30. If the control module 50 determines that the 3C power device is connected to the second interface 30, in this case, the discharging power required by the separate first interface 20 or the separate second interface 30 is not large, so the total discharging power of the two interfaces is not large, and therefore the demand of the battery pack 100 for discharging to the two interfaces at the same time can be met. And at the same time, the discharging power required by the two interfaces can also be met. Secondly, if the control module 50 determines that the 3C charging device is connected to the second interface 30, in this case, the discharging current of the separate first interface 20 is small, and at the same time, the charging current of a 3C charger interface is also small, and for a cell set 20, the damage and impact caused by discharging while charging with a small current can be negligible. And therefore, in this case, when the safety is ensured and the damage to the cell is minimized, it is also possible to meet the demand of discharging while charging and simultaneous discharging of the first interface 20 and the second interface 30 of the battery pack 100, and the using convenience for the user and the discharging safety performance of the battery pack are improved.

In one of the embodiments, when the control module 50 determines that the charging device 220 is connected to the first interface 20, the control module 50 detects the electrical device parameter of the charging device 220 and permits the charging device 220 to charge the cell set 10. When the charging device 220 is connected to the first interface 20, the electrical device parameter at least include parameter such as the model number of the charging device, the maximum permissible charging current, the maximum permissible charging voltage, the minimum permissible charging voltage, and the highest/lowest permissible charging temperature.

It is to be noted that when the power device 210 is connected to the first interface 20, the electrical device parameter at least include a parameter such as the model number of the power device, the maximum permissible discharging current, the maximum permissible discharging voltage, the minimum permissible discharging voltage, and the highest/lowest permissible discharging temperature.

Further, the control module 50 detects the 3C device parameter of the second interface 30 and determines the device type of the 3C device 300 according to the 3C device parameter. If the control module 50 determines that the 3C device 300 is the 3C load device 310, the control module 50 generates a permitting signal to control the switch module 40 to be conducted to connect the electrical pathway of the cell set 10 and the second interface 30, thereby permitting the cell set 10 to supply power to the 3C load device through the second interface. It is thereby achieved that, under the condition that the first interface 20 is connected with the charging device 220, the control module 50 controls to permit the discharging operation of the second interface 30.

When the 3C load device is connected to the second interface 30, the 3C device parameter at least include parameter such as the model number of the 3C device, the maximum permissible discharging current, the minimum permissible discharging voltage, the highest/lowest permissible discharging temperature, and the rated power.

In one of the embodiments, when the charging device 220 is connected to the first interface 20 of the battery pack 100 to charge the cell set 10. Furthermore, if the control module 50 determines that the connected 3C device 300 is the 3C charging device 320, the control module 50 controls the switch module 40 to be conducted to permit the 3C charging device 320 to charge the cell set 10 through the second interface 30; and detects the charging current I_{special} for charging the cell set 10 from the charging device 220, and detects the charging current I_{3C} for charging the cell set 10 from the 3C charging device 320.

The maximum permissible charging current I_{MAX} of the battery pack 100 is pre-stored in the control module 50, and the control module compares a sum of the charging current I_{special} of the charging device 220 and the charging current I_{3C} of the 3C charging device 320 with the pre-stored maximum permissible charging current I_{MAX}. If the sum of the charging currents I_{special} + I_{3C} is higher than the maximum permissible charging current I_{MAX}, the control module 50 generates a prohibiting signal to control the switch module 40 to be interrupted to prohibit the 3C charging device 320 from charging the cell set 10. It is thus achieved that the control module 50 controls to permit the charging operation of the second interface 30 under the condition that the maximum total charging current is constrained when the first interface 20 is connected with the charging device 220.

In one of the embodiments, when the control module 50 determines that the charging device 220 is connected to the first interface 20, fine control is carried out according to the device type of the 3C device connected to the second interface 30, which also makes it possible for the first interface 20 and the second interface 30 to operate simultaneously. When the charging device 220 charges the cell set 10 through the first interface 20, firstly, if the control module 50 determines that the 3C load device is connected to the second interface 30, in this case, the discharging current and the required discharging power of the second interface 30 are small, and the order of magnitude thereof is small relative to the charging current of the charging device, and thus the damage and impact to the cell set 10 may also be negligible.

Secondly, if the 3C charging device is connected to the second interface 30, in this case, the maximum permissible charging current I_{MAX} that the cell set 10 can withstand needs to be considered. In terms of circuit design, the first interface 20 and the second interface 30 are connected in parallel and are two electrical circuits independent of each other, so that when both the two interfaces are connected with the charging devices, the value of the current applied to the cell set 10 is superimposed, and therefore, once the sum of the total charging currents applied by the two charging devices to the cell set 10 is higher than the maximum permissible charging current I_{MAX} of the cell set 10, the control module 50 will prohibit the 3C charging device from charging the cell set 10 through the second interface 30. In this case, it is controlled to permit the 3C charging device to charge the cell set 10 only on the premise of not damaging the battery pack 100. Thereby, also under the precondition of safety, the demand of discharging while charging or simultaneous discharging of the first interface 20 and the second interface 30 of the battery pack 100 is achieved, which further improves the universality and safety performance of the battery pack 100.

It can be noted that during the actual use of the battery pack 100, there may be a difference in the connecting order of the first interface 20 and the second interface 30, but regardless of which interface the device is connected to, the control module 50 will detect the corresponding device parameter of the corresponding interface.

In particular, if the 3C device is firstly connected to the second interface 30 to enter the operating state, when a device is connected to the first interface 20, the control module 50 also performs detection and control in accordance with the foregoing method, i.e., after detecting the electrical device parameter of the first interface 20 and the 3C device parameter of the second interface 30, the control module will control the charging and discharging at the first interface 20, and further control whether to permit or to prohibit the operation at the second interface 30. When the control module 50 prohibits the second interface 20 from operating, the ongoing operation at the second interface will be interrupted.

In one of the embodiments, the electrical device parameter at least include parameter characterizing the type of the electrical device, and the parameter characterizing the type of the electrical device at least include, but are not limited to, terminal setting parameter, device type, voltage, current, temperature, power, and change rate of electrical parameter. The control module 50 accurately determines the type of the electrical device connected to the first interface 20 by means of the above-described detected parameter characterizing the type of the electrical device, thereby realizing real-time control over the charging and discharging operation of the second interface 30, so as to achieve the effects of safety and convenience.

In one of the embodiments, the control module 50 determines the device type of the electrical device according to the detected parameter characterizing the type of the electrical device; when the control module 50 determines that the power device 210 is connected to the first interface 20, if the control module 50 determines that at least one communication terminal is provided in the hardware setting of the electrical device, or, if the control module determines that at least one parameter of the electrical device parameter satisfies a preset condition, for example, when at least one parameter is not less than a preset threshold, it is determined that the power device 210 is the high-power power device 211. The electrical device parameter includes a parameter such as the device type, voltage, current, temperature, and power. Specifically, the electrical device parameter at least include parameter characterizing the type of the electrical device, and the parameter characterizing the type of the electrical device at least include terminal setting parameter, device type, voltage, current, temperature, power, and change rate of electrical parameter. For example, under conditions such as that when the power of the power device 210 is not less than a preset device power, when the motor power of the power device 210 is not less than a preset motor power, or when a motor is configured in the power device 210, the power device 210 is determined to be the high-power power device.

In one of the embodiments, the control module 50 may further include a detection unit, and the control module 50 detects the electrical device parameter of the electrical device and further controls the operation of the second interface 30 according to the electrical device parameter. Specifically, when the control module 50 determines that the electrical device parameter such as the voltage, current, power, temperature or the change rate of electrical parameter are not less than a preset value, it determines that the electrical device is the high-power power device 211 and controls the switch module to be interrupted to prohibit the charging and discharging of the second interface 30; and when the control module 50 determines that the electrical device parameter such as the voltage, current, power, temperature or the change rate of electrical parameter are not higher than the preset value, it determines that the electrical device is a non-high-power power device, and controls the switch module to be conducted to permit the charging and discharging operation of the second interface 30, that is, the 3C device is permitted to operate while the electrical device is permitted to operate.

In one of the embodiments, the control module 50 detects the electrical device parameter of the first interface 20 and determines the device type of the power device 210 according to the parameter characterizing the type of the electrical device, such as the terminal setting parameter.

It can be understood that the high-power power device 211 usually has higher power, higher operating current, and generated higher heat, which requires high performance of the battery pack 100, and thus is also likely to cause damage to the battery pack 100. In order to ensure the safety performance of the battery pack 100 and the high-power power device 211, the high-power power device 211, in addition to be provided with a power supply positive terminal and a power supply negative terminal, is also provided with at least one communication terminal for signal transmission between the battery pack 100 and the high-power power device 211. However, the power of the low-power power device 214 is generally small, therefore, both the operating current and the generated heat are relatively small, so the requirement for the performance of the battery pack 100 is also relatively low. In addition, the low-power power device 214 is usually in a portable and compact form, and thus only a power supply positive terminal and a power supply negative terminal are usually provided at the interface.

Therefore, the specificity of setting the communication terminal makes the terminal setting parameter also become a determinable parameter characterizing the device type of the power device 210. When the terminal setting parameter detected by the control module 50 characterizes that the power device 210 is not provided with the communication terminal, it is determined that the power device 210 is the low-power power device 214. When the terminal setting parameter detected by the control module 50 characterizes that the power device 210 is provided with at least one communication terminal, more electrical device parameters of the power device 210 are acquired through the communication terminal, and whether the power device 210 is the high-power power device 211 or the low-power power device 214 is accurately determined according to other parameter characterizing the type of the electrical device among the electrical device parameter.

In one of the embodiments, the control module 50 may also include an AFE chip, the AFE chip is connected to each cell 10 of the cell set 10 to detect the single voltage of each cell 10 and determine the equilibrium state of each cell. And when it is determined that a difference value between the voltages of the individual cells exceeds a preset value, and it is determined that the individual cells are not equilibrated, the battery pack 100 enters a disequilibrium fault state. In addition, the AFE chip may also be used for detecting various operating parameters of the battery pack 100, for example, the charging current, discharging current, charging voltage, discharging voltage, and the like, and when one of the above detected operating parameters exceed the preset value, it is determined that the battery pack enters a fault. Specifically, the battery pack fault may also include: an over-discharge fault, an over-charge fault, an over-current fault, an over-temperature fault, a low temperature fault, and the like.

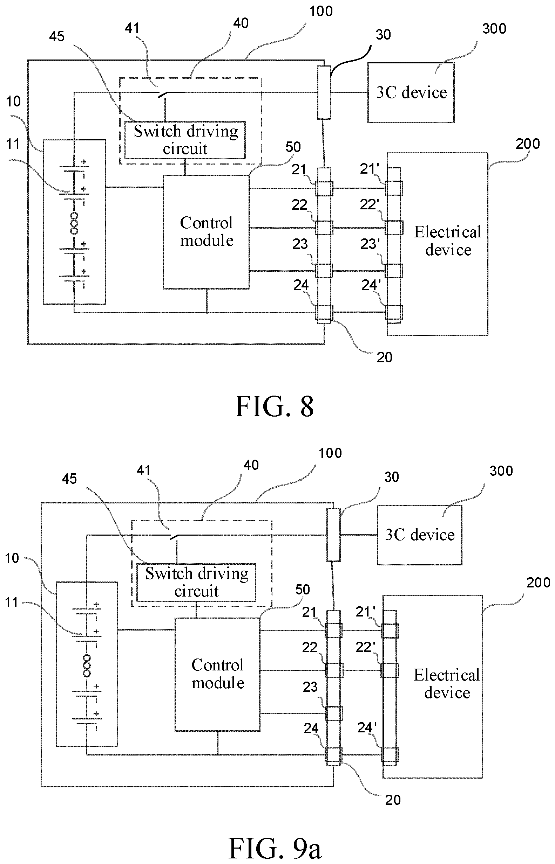

In one of the embodiments, referring to FIG. 8, the first interface 20 of the battery pack 100 includes power supply terminals 21, 24 and two communication terminals 22, 23, typically provided at the interface in the form of an electrode plate or other conductive connectors. The power supply positive terminal 21 and the power supply negative terminal 24 are electrically connected to a positive terminal and a negative terminal of the power supply of the battery pack 100, respectively. The communication terminal 22 may be provided as a digital communication terminal capable of performing digital communication; and the communication terminal 23 may be provided as an analog communication terminal for performing analog communication. Correspondingly, when the electrical device 210 is connected with the battery pack 100 through the first interface 20, the electrical device 210 is correspondingly connected with the battery pack 100 according to the specific interface terminal setting of the electrical device.

When the electrical device with a communication function is mated to the battery pack 100, the battery pack 100 and the electrical device communicate with each other through the digital communication terminal to transmit various electrical device parameters, such as the device type, the operating requirement of the electrical device, the state parameters of the cell set, the battery pack fault state, the electrical device fault state, and other signals. Thus, the battery pack 100 can acquire and determine that whether the electrical device is the power device or the charging device through the information transmitted by the digital communication terminal. Specifically, according to whether the power device is the high-power power device or the low-power power device, charging management or discharging management for the battery pack is performed. In addition, the battery pack may send a battery pack fault state signal, or an analog signal characterizing the state parameter of the battery pack, to the electrical device through the analog communication terminal. Both the signal of the digital communication terminal and the signal of the analog signal terminal can make the electrical device stop operating in time, so as to achieve the double protection of both the digital signal and the analog signal, and effectively improve the safety of the electrical device and the battery pack when cooperating to operate.

Specifically, as shown in FIGS. 8-10, the interface of the electrical device 210 is at least provided with a power supply positive terminal 21' and a power supply negative terminal 24' to be correspondingly mated with the power supply positive terminal 21 and the power supply negative terminal 24 of the first interface 20 of the battery pack 100, so as to form an electrical circuit with the battery pack 100. In addition, communication terminals may also be provided on an interface 20' of the electrical device 210, for example, a digital communication terminal 22' is provided alone, or an analog communication terminal 23' is provided alone, or both the digital communication terminal 22' and the analog communication terminal 23' are provided.

In one of the embodiments, when the battery pack 100 is connected to the electrical device 200 through the first interface 20 and the electrode plates are connected, a change in the electrical level of the analog communication terminal 23, or an activation signal generated at the digital communication terminal 22 can activate the control module 50. It can be understood that if the battery pack 100 is also provided with an activation button, triggering the activation button may also activate the control module 50. The activation of the control module 50 herein is not limited to the above example, and those skilled in the art may activate the control module 50 according to circuit principles.

After the control module 50 is activated, the control module detects the electrical device parameter of the electrical device 200, and recognizes the terminal setting state of the electrical device according to the electrical device parameter. If the control module 50 determines that the electrical device 200 is not provided with the communication terminal, it is determined that the electrical device 200 is the low-power power tool 214 or the charging device 220, the battery pack 100 is controlled to supply power to the low-power powered device 214 through the first interface 20, or the battery pack 100 is charged by the charging device 220, and at the same time, the charging and discharging operation of the second interface 30 is controlled to be permitted. If the control module 50 determines that the electrical device 200 is provided with at least one communication terminal, more electrical device parameter of the electrical device 200 may be acquired through the communication terminal. If the electrical device 200 is provided with the digital communication terminal 22', the battery pack 100 may establish digital communication with the electrical device 200 through the digital communication terminal 22 to acquire specific parameter information of the electrical device 200; if the electrical device 200 is provided with the analog signal terminal 23', the battery pack 100 may acquire the state information of the electrical device 200 through the analog signal terminal 23, such as the normal state and the abnormal state of the electrical device; and if the electrical device 200 is provided with both the digital signal terminal 22' and the analog signal terminal 23', the battery pack 100 may also communicate with the electrical device simultaneously through the digital communication terminal 22 and the analog communication terminal 23.

In one of the embodiments, referring to FIG. 8, if the interface 20' of the electrical device 200 is provided with the power supply positive terminal 21', the power supply negative terminal 24', the digital communication terminal 22' and the analog communication terminal 23', when the battery pack 100 is connected with the electrical device through the first interface 20, the four terminals correspondingly match to achieve electrical connection. Specifically, the control module 50 is capable of communicating with the electrical device 200 through both the digital communication terminal and the analog communication terminal, i.e., the battery pack 100 and the electrical device 200 are capable of performing communication in both digital and analog manners.

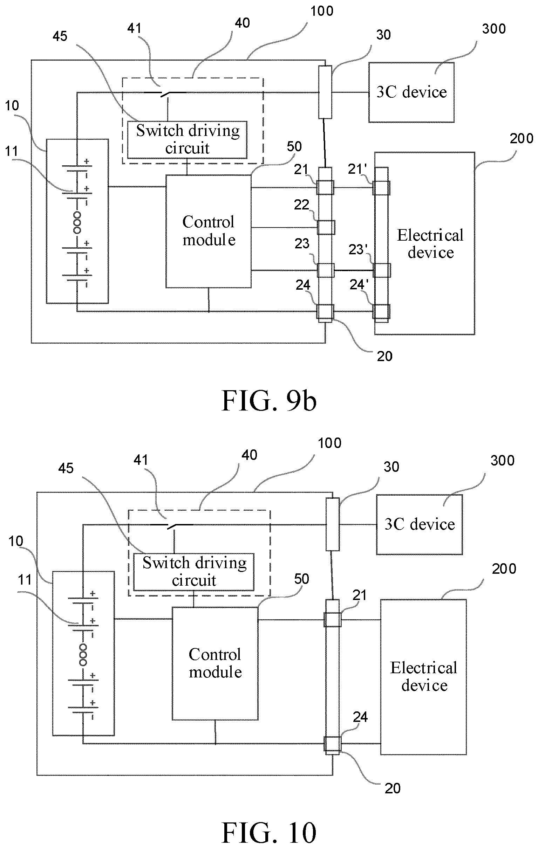

In one of the embodiments, referring to FIGS. 9-10, if the interface 20' of the electrical device 200 is provided with the power supply positive terminal 21', the power supply negative terminal 24', and a communication terminal, the communication terminal may be any one of the digital communication terminal 22' or the analog communication terminals 23', then the control module 50 communicates with one of the communication terminals 22' or 23' that the electrical device has.

Specifically, referring to FIG. 9, if the electrical device 200 is only provided with the digital communication terminal 22', the control module 50 communicates with the electrical device 200 by means of digital communication. The control module 50 firstly sends a digital handshake signal, and if it is able to receive a handshake reply signal from the electrical device 200, it is determined that the electrical device 200 is provided with the digital communication terminal 22' and supports digital communication. Further, the control module is capable of acquiring the electrical device parameter of the electrical device 200 through the digital communication terminal 22', determining the device type of the electrical device 200 according to the electrical device parameter, and controlling the charging and discharging of the electrical device 200 according to the electrical device parameter. For example, if the control module 50 determines that the electrical device is the charging device 220 through the digital communication terminal 22', the battery device 220 is controlled to permit to charge the cell set 10, and at the same time, the control module 50 sends the operating parameter of the battery pack 100, such as the voltage, current, temperature, and power, to the charging device 220, so that the charging device 220 may accurately and safely control charging to the cell set 10 according to the above operating parameter. Correspondingly, the control module 50 acquires the electrical device parameter of the charging device 220, such as the charging current and temperature, through the digital communication terminal 22', so that it can timely determine the operating state of the special charging device 220 to avoid the case where the charging device 220 has a fault, causing damage to the battery pack 100.

If the electrical device 200 is only provided with the analog communication terminal 23', referring to FIG. 10, the control module 50 communicates with the electrical device 200 by means of analog communication. The control module 50 firstly sends a digital handshake signal, and if a handshake reply signal from the electrical device 200 is not received within a predetermined period of time or a non-corresponding handshake reply signal is received, it is determined that the electrical device 200 does not support digital communication, and then the analog communication terminal 23 is selected for communication. Alternatively, the control module 50 detects the electrical level parameter of the digital communication terminal 22 and the analog communication terminal 23 at the first interface 20 to determine whether a corresponding communication terminal is connected to the electrical device 200. The specific realization way is not limited to the above manners.

It can be understood that if the electrical device 200 is only provided with the analog communication terminal 23', taking the situation of using the electric level parameter as an analog signal as an example, different values of the electrical level parameter may be preset, for example, specific values of the electrical level parameter characterize specific operating states, and specific values of the electrical level characterizing fault states, including an over-charge fault, an over-discharge fault, an over-current fault, an over-temperature fault, a low-temperature fault, a disequilibrium fault, and so on, are respectively set. Further, the control module 50 detects an identification resistance of the electrical device 200 through the analog communication terminal 23 to identify the device model of the electrical device, and controls the charging or discharging of the cell set 10 according to the identified device model. When any one of the battery pack 100 and the electrical device 200 has a fault during charging or discharging of the battery pack 100, an analog signal characterizing the abnormality is sent to the other one through the analog communication terminal 23 or 23', thereby controlling to stop charging and discharging, so as to improve the safety performance of the battery pack 100.

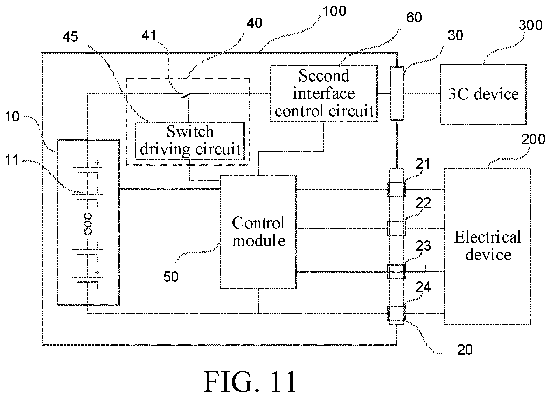

In particular, referring to FIG. 11, if the electrical device 200 connected to the first interface 20 is provided with neither the digital communication terminal 22' nor the analog communication terminal 23', in other words, the electrical device 200 does not support communication, and is only provided with the power supply terminals 21' and 24'. In order to improve the applicability of the battery pack 100, the control module 50 will determine that the electrical device 200 is a low-power tool, and control the operation of the two interfaces of the battery pack 100 according to this, and the specific mode is consistent with the foregoing description, which will not be repeated herein.

It is to be noted that when the electrical device 200 connected to the first interface 20 is only provided with the power supply terminals 21' and 24', such electrical device 200 can usually be understood as a simple small tool that does not require real-time control, such as soldering iron and scissors, and this type of tools usually have a low power.

In one of the embodiments, referring to FIG. 11, the battery pack 100 further includes a second interface control circuit 60, which is connected to the second interface 30 and electrically connected with the switch module 40 and the control module 50. Specifically, the second interface control circuit 60 responds in real time to the connection of the device to the second interface 30, the second interface control circuit 60 and the control module 50 are activated when a device is connected to the second interface 30, and the second interface control circuit 60 detects the 3C device parameter of the 3C device 300 at the second interface 30 and transmits the 3C device parameter and the determination result of the corresponding parameter to the control module 50, so that the control module 50 achieves the detection of the 3C device parameter. Further, the control module 50 generates a control instruction to be sent to the second interface control circuit 60 in response to the data acquired from the second interface control circuit 60, so as to control the charging and discharging of the second interface 30.

For example, when the 3C device is connected to the second interface 30, the second interface control circuit 60 detects the 3C device parameter, and when it is determined that the 3C device is the 3C load device 310, the type of the 3C load device, the 3C device parameter, and the like are transmitted to the control module 50. The control module 50 correspondingly generates a discharging control command to be sent to the second interface control circuit 60, and at the same time controls the switch module 40 to be conducted to connect the electrical circuit from the cell set to the second interface control circuit 60, thereby controlling the power supply to the 3C load device 310. Correspondingly, when the 3C device 300 is determined to be the 3C charging device 320, the type of the 3C charging device, the 3C device parameter, and the like are transmitted to the control module 50, the control module 50 correspondingly generates a charging control instruction to be sent to the second interface control circuit 60, and at the same time controls the switch module 40 to permit or prohibit the charging of the 3C charging device 320 to the cell set 10.

In one of the embodiments, the second interface control circuit 60 may include a PD chip, and a DC-DC buck-boost circuit, where the PD chip and the DC-DC buck-boost circuit may be achieved using an SOC integrated chip, or may be achieved using two discrete chips.

The second interface control circuit 60 supports a fast charging protocol, and when the second interface control circuit 60 determines that the 3C device supports fast charging or permits fast charging according to the 3C device parameter, it sends the determination result to the control module 50, and the control module 50, in a case of being permitted by the parameter of the battery pack 100, is able to control the second interface control circuit 60 to perform fast charging on the 3C device through the second interface 30, or to perform fast charging on the battery pack 100 by the 3C device through the second interface.

It can be understood that the second interface control circuit 60 also supports other protocols common to other 3C interfaces, not limited to the fast charging protocol mentioned above.

In one of the embodiments, the second interface control circuit 60 may be integrated in the control module 50, and for ease of description, the second interface control circuit 60 is treated as a second master control module 52, and a master control module not provided with the second interface control circuit 60 is formed as a first master control module 51. That is, the control module 50 may include the first master control module 51 and the second master control module 52. The first master control module 51 and the second master control module 52 are electrically connected to communicate with each other; the first master control module 51 is used for controlling the charging and discharging operation of the first interface 20; and the second master control module 52 is used for controlling the charging and discharging operation of the second interface 30. When the 3C device is connected to the second interface 30, the second master control module 52 starts communication with the first master control module 51 according to the 3C device parameter of the 3C device connected to the first interface 20.

Specifically, the second master control module 52 sends an operation request message about whether to permit the start of the current operation or not to the first master control module 51, and correspondingly, the first master control module 51, in response to the operation request message, sends an operation response message of permitting an operation request or prohibiting the operation request to the second master control module 52.

It can be understood that the first master control module 51 and the second master control module 52 may be two chips provided independently, or may be an integrated chip. In addition, the various functional modules mentioned in the present application may be functional chips respectively independent of each other, or specific functional modules may be selected for integration according to specific needs.

In the first embodiment of the embodiments, the second interface 30 is a USB Type C interface, and the second interface control circuit 60 achieves communication with the control module 50 by means of UART or I2C.

It can be understood that the second interface control circuit 60 is usually a control circuit corresponding to the type of the second interface 30, for example, if the second interface 30 is provided as a USB Type C interface, the second interface control circuit 60 is correspondingly provided as a PD control module.

In one of the embodiments, the main control module 50 has a standby state and an operating state. In the standby state, the power consumption of the master control module 50 is relatively low. When both the first interface 20 and the second interface 30 are not connected with devices, the master control module 50 is in the standby state.

Further, if a device is connected to any interface of the first interface 20 and the second interface 30, the master control module 50 is activated and the master control module 50 switches from the standby state to the operating state.

It is to be understood that when the master control module 50 detects any fault of the battery pack 100 or receives any signal characterizing a fault of the battery pack 100, the master control module 50 enters the standby state.

In one of the embodiments, the switch module 40 further includes a second switch module, and the second switch module is electrically connected between the second interface control circuit 60 and the second interface 30, and configured to receive a control signal of the second interface control module to control the operation of the second interface 30. When the control module 50 determines that no device is connected to the second interface 30 or that no matching operation is suitable for the second interface 30 and the cell set 10, the second interface control circuit is controlled to be interrupted.

In particular, before the control module 50 enters the standby state, the second switch module is interrupted to interrupt the power consumption of a part of the circuit, so as to reduce the power consumption of the whole control module 50. In the standby state, the control module 50 still maintains the identification for connection to the first interface 20 and the second interface 30, and only maintains a weak current supply, with less power consumption.

In one of the embodiments, the electrical devices connected to the first interface 20 include a first electrical device and a second electrical device. The first electrical device has an interface different from that of the second electrical device. The first electrical device can be mated directly to the first interface of the battery pack 100, and the second electrical device can only be mated to the first interface through an adapter.

For the second electrical device that cannot be directly mated to the battery pack 100, the battery pack 100 can cooperate, through the guide rail, with a slide groove in the adapter, and then mated to the second electrical device by the adapter for matched use. The reason why the second electrical device cannot be directly mated to the battery pack may be due to a mismatch of the mechanical structure, a mismatch of the connecting terminals configured for the respective interfaces, or the mismatch of the mechanical structure together with the mismatch of the connecting terminals. By providing a first connection port that matches the first interface of the battery pack 100 in one side of an adapter 400, and providing a second connection port that matches the electrical device interface in the other side of the adapter 400, the battery pack 100 can be mated to the second electrical device through the adapter 400.

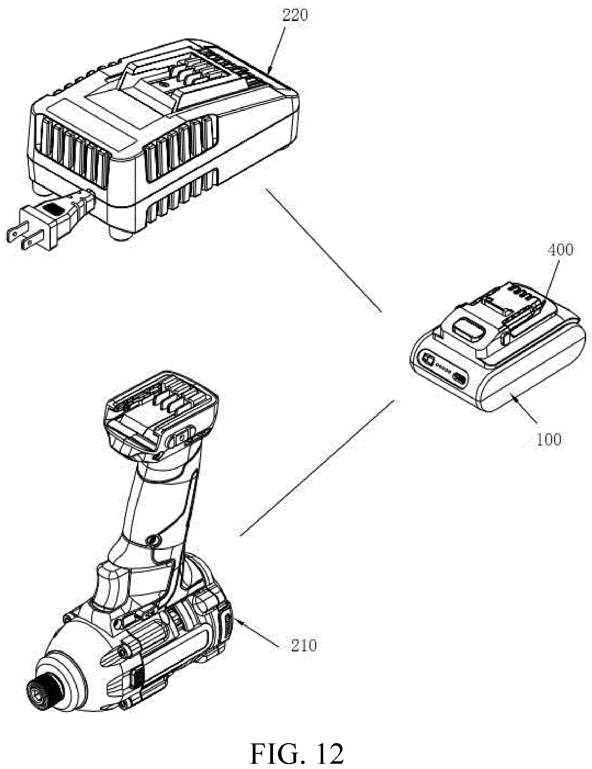

As shown in FIG. 12, the battery pack 100 is mated to the adapter 400 and then mated to the power device 210 or the charging device 220, thereby realizing discharging to the power device 210 or charging by the charging device 220.

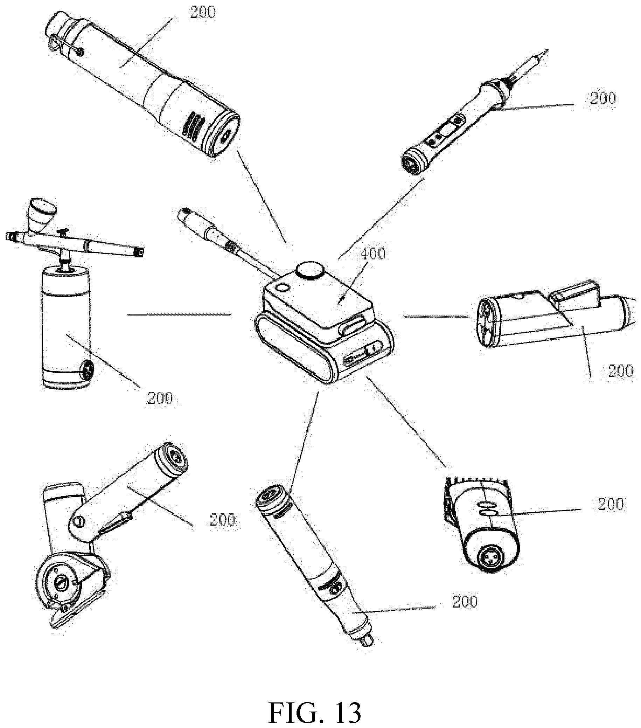

In particular, the form of the adapter 400 is also non-fixed, with the battery pack 100 cooperating with the slide groove in the adapter by means of the guide rail, and the adapter 400 is provided with a cable for use in mating with the second electrical device. FIG. 13 illustrates some of the electrical device that may be mated to the battery pack 100 by connecting the adapter 400 through the cable.

### Embodiment II

This embodiment provides a charging and discharging control method of a battery pack, and the battery pack includes a cell set; a first interface, configured to be detachably connectable to an electrical device; a second interface, configured to be detachably connectable to a 3C device; and a switch module, electrically connected between the cell set and the second interface of the battery pack. The charging and discharging control method of a battery pack is applicable to the battery pack provided in Embodiment I, and is also applicable to other battery packs of similar structures.

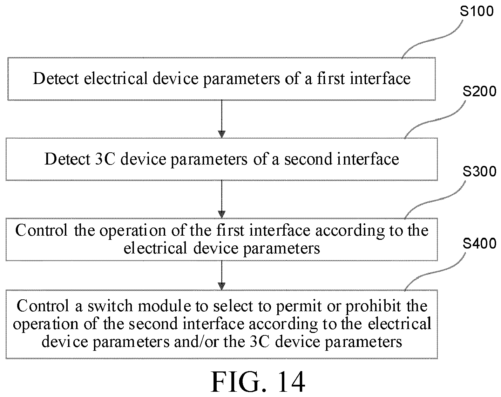

Referring to FIG. 14, the charging and discharging control method of a battery pack provided in this embodiment includes the following steps:
Step S100: Detect an electrical device parameter of an electrical device 200 of a first interface 20.
Step S200: Detect a 3C device parameter of a 3C device 300 of a second interface 30.
Step S300: Control the operation of the first interface 20 according to the electrical device parameter.
Step S400: Control a switch module 40 to perform to permit or prohibit the operation of the second interface 30 according to the electrical device parameter and/or the 3C device parameter.

The charging and discharging control method of a battery pack provided in this embodiment belongs to the same inventive concept as the battery pack provided in Embodiment I. The description of the battery pack and the above steps can refer to the specific content in Embodiment I for details, which will not be repeated herein.

In the above-described charging and discharging control method of a battery pack, the electrical device parameter of the electrical device 200 of the first interface 20 are detected, and the operation of the first interface 20 is controlled according to the electrical device parameter; the 3C device parameter of the 3C device 300 of the second interface 30 are detected, and the switch module 40 is controlled to control to permit or prohibit the operation of the second interface 30 according to the 3C device parameter. That is, the charging and discharging of the battery pack to an external device through the first interface 20 and/or the second interface 30 are controlled by detecting the electrical device parameter and/or the 3C device parameter of devices connected to the first interface 20 and/or the second interface 30, so that the first interface 20 and the second interface 30 can achieve simultaneous operation while ensuring the safety and controllability of the battery pack 100, which satisfies the user's demand for simultaneous operation of the two interfaces, thereby improving the safety, applicability and application scenarios of the battery pack 100.

In one of the embodiments, the step of controlling the first interface 20 according to the electrical device parameter includes: a device type of the electrical device 200 is determined according to the electrical device parameter, the electrical device includes a power device and a charging device in terms of the device type; when the electrical device is determined to be a power device 210, a cell set 10 is controlled to supply power to the power device 210 through the first interface 20; and when the electrical device is determined to be a charging device 220, it is controlled to charge the cell set 10 by the charging device 220 through the first interface 20.

It can be understood that either the power device 210 or the charging device 220 is connected to the first interface 20, which is a power appliance and charger that is in standard match with the battery pack 100 for power tools, so that when the device that is in standard match is connected to the first interface 20, the battery pack 100 correspondingly performs the action of discharging or charging.

In one of the embodiments, the control method provided in this embodiment further includes: the power device includes a high-power power device and a low-power power device, and whether the power device 210 is a high-power power device 211 or not is determined according to the electrical device parameter. If it is determined that the high-power power device 211 is connected, the switch module 40 is interrupted to prohibit the operation of the second interface 30.

Correspondingly, if it is determined that the low-power power device 214 or the charging device 220 is connected, the switch module 40 is conducted to permit the charging and discharging operation at the second interface 30.

It is to be noted that when the high-power power device 211 is connected to the first interface 20, in order to meet the output power demand of the high-power power device 211, as well as the consideration of the endurance, the power output of the other interfaces needs to be reduced as much as possible. Therefore, the charging and discharging operation of the second interface 30 will be prohibited. In this case, the high-power power device is usually in a harsher operating environment, and a user has less demand for the second interface, so it is more important to be able to ensure the power output of the first interface 20.

In one of the embodiments, the control method provided by this embodiment further includes: when it is determined that the power device 210 is not the high-power power device 211, i.e., it is the low-power power device 214 according to the electrical device parameter, the 3C device parameter of the 3C device 300 mated to the second interface 30 are further detected, and a device type of the 3C device 300 is determined according to the 3C device parameter. The 3C device 300 at least includes a 3C load device and a 3C charging device in terms of the device type.

Further, when the 3C device is determined to be a 3C load device 310, the switch module 40 is controlled to be conducted to permit the cell set 10 to supply power to the 3C load device 310 through the second interface 30; and
when the 3C device is determined to be a 3C charging device 320, the switch module 40 is controlled to be conducted to permit to charge the cell set 10 by the 3C charging device 320 through the second interface 30.

In the conventional scheme, when the battery pack 100 discharges to the outside through the first interface 20, the following two situations usually exist: first, the charging and discharging of the second interface 30 are not controlled; and second, the power supply of the second interface 30 is directly prohibited. Therefore, for the first case, when the output power required by the first interface 20 is large, the second interface 30 is not controlled, and can still output power to the outside, which will directly lead to lack of the output power of the battery pack 100 to the high-power power device, resulting in insufficient power, which cannot meet the operation demand, or will shorten the time of endurance of the battery pack 100. As for the second case, if the output power required by the first interface 20 is small, it is able to support the normal power supply to the second interface 30, at this time, if the power supply to the second interface 30 is directly prohibited, the user will not be able to use the second interface 30 simultaneously to achieve the power supply to the 3C load device, thus causing inconvenience.

In order to solve this problem, this embodiment detects the electrical device parameter of the electrical device 200 connected to the first interface 20 and determines whether the electrical device is the high-power power device 210, and conditionally performs whether to permit the operation of the second interface 30 in response to the power demand of the power device connected to the first interface 20, which not only meets the requirement of high-power output, but also supports the simultaneous operation of the two interfaces when the battery pack 100 is at low-power output, so as to not only improve the degree of convenience and applicability, but also improve the safety and endurance of the battery pack 100.

It is to be noted that when a non-high-power power device 220 is connected to the first interface 20 and the 3C load device or the 3C charging device is connected to the second interface 30, the two interfaces are permitted to operate simultaneously, i.e., simultaneous discharging is permitted, or discharging while charging is permitted. For simultaneous discharging and discharging while charging under such conditions, specific description has been given in the previous embodiment, which will not be repeated herein.

In one of the embodiments, when the electrical device 200 is determined to be the charging device 220, the step of detecting the 3C device parameter of the 3C device 200 of the second interface 30 and controlling the switch module 40 to control to permit or prohibit the operation of the second interface 30 according to the 3C device parameter specifically includes:
the 3C device parameter of the 3C device 300 mated to the second interface 30 is detected and the device type of the 3C device 300 is determined according to the 3C device parameter; and
when the 3C device is determined to be the 3C load device 310, the switch module 40 is conducted to permit the cell set 10 to supply power to the 3C load device 310 through the second interface 30.

In other words, when the charging device 220 is connected to the first interface 20 of the battery pack 100, the 3C device parameter of the second interface 30 are further detected. If the 3C load device 310 is connected to the second interface 30, power supply to the 3C load device is permitted, i.e., in a particular case, discharging while charging of the two interfaces is permitted.

In one of the embodiments, when it is determined that the charging device 220 is connected to the first interface 20, the control method provided by this embodiment further includes: if the 3C charging device 320 is connected to the second interface 30,
a first charging current I_{special} for the cell set 10 by the charging device 220 connected to the first interface 20, and a second charging current I_{3C} for the cell set 10 by the 3C charging device 320 connected to the second interface 30 are detected; and
when a sum I_{special} + I_{3C} of the first charging current I_{special} and the second charging current I_{3C} is determined to be higher than a charging current threshold I_{MAX} of the cell set 10, the switch module 40 is interrupted to prohibit the 3C charging device 320 from charging the cell set 10 through the second interface 30.

In other words, when both interfaces of the battery pack 100 are connected with charging devices, it is necessary to detect the charging currents I_{special} and I_{3C} of the two charging devices to the cell set 10, and compare the sum I_{special} + I_{3C} of the two charging currents with the maximum charging current threshold I_{MAX} that is pre-stored in the battery pack 100, and if the sum is higher than the maximum charging current threshold I_{MAX}, charging of the second interface 30 needs to be interrupted in order to ensure that the cell set 10 is not damaged. When the two charging devices perform charging at the same time, the charging rate can be increased to a certain extent, and the battery pack 100 will also interrupt the charging of the additional 3C charging device in time when the charging current is detected to be too high, so as to ensure the safety of the battery pack.

In one of the embodiments, the charging and discharging control method provided in this embodiment further includes:
the electrical device parameter at least include a parameter characterizing the type of the electrical device, and the parameter characterizing the type of the electrical device at least include terminal setting parameter, device type, voltage, current, temperature, power, and change rate of electrical parameter. The type of the electrical device connected to the first interface 20 is accurately determined by means of the above-described detected parameter characterizing the type of the electrical device, thereby realizing real-time control over the charging and discharging operation of the second interface 30, so as to achieve the effects of safety and convenience.

In one of the embodiments, the charging and discharging control method provided in this embodiment further includes: the device type of the electrical device is determined according to the parameter characterizing the type of the electrical device; and when the electrical device is the power device 210,
if at least one parameter of the electrical device parameter satisfies a preset condition, for example, when at least one parameter is not less than a preset threshold, it is determined that the power device 210 is the high-power power device 211. The electrical device parameter at least include parameter such as the device type, voltage, current, temperature, and power. Specifically, the electrical device parameter at least include parameter characterizing the type of the electrical device, and the parameter characterizing the type of the electrical device at least include terminal setting parameter, device type, voltage, current, temperature, power, and change rate of electrical parameter. For example, when the power of the power device is not less than a preset power, or the motor power of the power device is not less than a preset motor power, or a motor is configured in the power device, the power device is determined to be the high-power power device.

For another example, if the terminal setting parameter is used as the parameter characterizing the type of the electrical device for determination, if it is identified that the power device 210 is not provided with a communication terminal, the power device 210 is determined to be the low-power power device 211, and the charging and discharging of the battery pack 100 to the second interface 30 is controlled to be permitted; and if it is identified that the power device 210 is provided with at least one communication terminal, the communication terminal is used to achieve signal transmission between the battery pack 100 and the power device 210.

Specifically, when the electrical device 200 is connected to the first interface 20, power supply terminals 21, 24 and two communication terminals 22, 23 of the battery pack 100 are all connected to the interface of the electrical device 200. If a control module 50 detects a change of electrical level at an analog communication terminal 23, or detects an electrical level signal characterizing a specific state, it is determined that the electrical device 200 is provided with an analog communication terminal 23', and signal transmission is performed through the analog communication terminal 23. When the electrical device 200 is connected to the first interface 20, the battery pack 100 sends a handshake signal through the digital communication terminal 22, and if a handshake reply signal of the electrical device 200 is not received within a predetermined period of time or a non-corresponding handshake reply signal is received, it is determined that the electrical device 200 is not provided with a digital communication terminal 22'. Conversely, if the handshake succeeds, communication is carried out through the digital communication terminal 22, and according to the communication, the electrical device parameter are acquired to control the charging and discharging operation of the first interface 20 and the second interface 30.

In one of the embodiments, before the step of detecting the electrical device parameter of the electrical device 200 of the first interface 20 and/or detecting the 3C device parameter of the 3C device 300 of the second interface 30, the charging and discharging control method provided in this embodiment further includes:
a mating state of the first interface 20 and/or the second interface 20 is detected, if it is determined that a device is connected to the first interface 20 and/or the second interface 30, communication is established with the electrical device 200 and/or the 3C device 300, and the corresponding electrical device parameter and/or 3C device parameter of the device connected to the first interface 20 and/or the second interface 30 are detected.

Specifically, the control module 50 will determine and identify connection of the device to the first interface 20 and the second interface 30, and when a device is connected, the control module 50 is activated through the communication terminal 23 and/or 24, and meanwhile, the control module 50 establishes communication with the corresponding device through the communication terminal 23 and/or 24.

In one of the embodiments, the first interface 20 of the battery pack 100 is provided with a power supply positive terminal 21, a power supply negative terminal 24, the digital communication terminal 22, and the analog communication terminal 23. Correspondingly, an interface 20' of the electrical device is correspondingly provided with a power supply positive terminal 21', a power supply negative terminal 24', the digital communication terminal 22', and the analog communication terminal 23'. At this moment, the control module 50 communicates with the electrical device 200 in both digital and analog manners.

In one of the embodiments, when the electrical device 200 connected to the first interface 20 is only provided with one of the digital communication terminal 22' and the analog communication terminal 23', i.e.: only the digital communication terminal 22' or only the analog communication terminal 23', then the control module 50 communicates with the electrical device 200 in a corresponding manner.

In particular, if it is determined that the electrical device 200 is not provided with the communication terminal and is only provided with the power supply terminal, the electrical device 200 is determined to be a low-power tool for control. With respect to the determining method and the specific communication control, please refer to the description of Embodiment I, which will not be repeated herein.

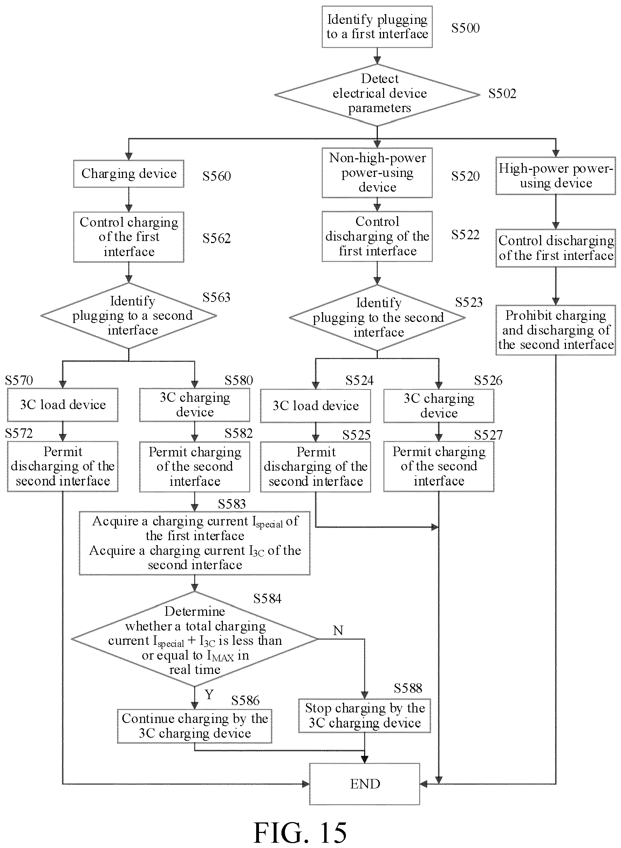

The charging and discharging control method provided in this embodiment is described below in combination with FIG. 15, by way of a specific example.

Step S500: Identify a connection state of the electrical device 200 at the first interface 20. The control module 50 cyclically monitors the device connection condition at the first interface 20, and immediately executes S502 if it is identified that the electrical device 200 is connected.

Step S502: After the device is plugged into the first interface 20, detect the electrical device parameter of the connected electrical device 200, and determine the device type of the electrical device 200 according to the electrical device parameter. According to different device types, different charging and discharging control strategies are performed for the first interface 20 and the second interface 30.

If the electrical device 200 is determined to be the high-power tool 211, step S510 is executed. If the electrical device 200 is determined to be the non-high-power power device, step S520 is executed. If the electrical device is determined to be the charging device 220, i.e., a special charger 220, step S560 is executed.

Step S512: When it is determined that the high-power power device 211 is connected to the first interface 20, the control module 50 acquires the power demand of the high-power power device 211 according to the detected electrical device parameter, and detects a parameter of the cell set to determine whether the cell set is suitable for discharging, and if the cell set 10 is suitable for discharging, then controls the cell set to match the power demand of the high-power power device 211 and controls the cell set to discharge to the outside through the first interface 20, and proceed to step S514.

It can be understood that if the power demand of the high-power power device 211 cannot be acquired, the battery pack 100 outputs electrical energy at full power to the first interface 20.

Step S514: The control module 50 outputs a prohibiting command, or performs direct control, to interrupt the switch module 40, so as to prohibit the charging and discharging of the second interface 30, which avoids damage to an electrical pathway of the second interface 30 during operation of the high-power power device 211, and also ensures the power supply demand of the high-power powered device 211.

Step S522: When it is determined that a non-high-power power device, such as the low-power power device 214, is connected to the first interface 20, the control module 50 acquires the power demand of the low-power power device 214 according to the detected electrical device parameter, and detects the parameter of the cell set to determine whether the cell set is suitable for discharging, and if the cell set 10 is suitable for discharging, controls the cell set to match the power demand of the low-power power device 214 and controls the cell set 10 to discharge to the outside through the first interface 20, and proceed to step S523.

Step S523: When the low-power power device 214 is connected to the first interface 20, permit the operation of the second interface 30. The control module identifies the device connection condition of the second interface 30, and if no device is connected, cyclic detection continues, and if the 3C device 300 is connected, the 3C device parameter of the 3C device 300 are detected and the device type of the 3C device 300 is determined. If the 3C device 300 is determined to be the 3C load device 310, proceed to step S524. If the 3C device 300 is determined to be the 3C charging device 320, proceed to step S526.

Steps S524-S525: When the 3C device 300 is determined to be the 3C load device 310, output a permitting command to connect the electrical pathway of the cell set 10 and the second interface 20. The control module 50 acquires the power demand of the 3C load device 310 according to the detected 3C device parameter, and detects the parameter of the cell set to determine whether the cell set is suitable for discharging, and if the cell set 10 is suitable for discharging, the cell set is controlled to match the power demand of the 3C load device 310, and the cell set 10 is controlled to permit discharging to the 3C load device through the second interface 30. If the control module 50 acquires a full signal of the 3C load device 310 according to the detected 3C device parameter, the control module 50 enters a standby mode.

Steps S526-S527: When the 3C device 300 is determined to be the 3C charging device 320, output a permitting command to connect the electrical pathway of the cell set 10 and the second interface 20. The control module 50 acquires the charging capability of the 3C charging device 320 according to the detected 3C device parameter, and detects the parameter of the cell set to determine whether the cell set is suitable for charging, and if the cell set 10 is suitable for charging, the charging capability of the 3C charging device 320 is controlled to match the charging demand of the cell set 10, and it is controlled to permit the second interface 30 to receive charging from the 3C charging device.

Step S562: When it is determined that the charging device 220 is connected to the first interface 20, detect the parameter of the cell set to determine whether the cell set is suitable for charging, and if the cell set 10 is suitable for charging, control the charging device 220, i.e., the special charger to charge the cell set 10 through the first interface 20; and proceed to step S563.

Step S563: When the charging device 220 is connected to the first interface 20, permit the operation of the second interface 30. The control module identifies the device connection condition of the second interface 30, and if no device is connected, cyclic detection continues, and if the 3C device 300 is connected, the 3C device parameter of the 3C device 300 are detected and the device type of the 3C device is determined. If the 3C device 300 is determined to be the 3C load device 310, proceed to step S570. If the 3C device 300 is determined to be the 3C charging device 320, proceed to step S580.

Steps S570-S572: When the 3C device 300 is determined to be the 3C load device 310, output a permitting command to connect the electrical pathway of the cell set 10 and the second interface 20. The control module 50 acquires the power demand of the 3C load device 310 according to the detected 3C device parameter, and detects the parameter of the cell set to determine whether the cell set is suitable for discharging, and if the cell set 10 is suitable for discharging, the cell set is controlled to match the power demand of the 3C load device 310, and the cell set 10 is controlled to permit discharging to the 3C load device through the second interface 30. If the control module 50 acquires a full signal of the 3C load device 310 according to the detected 3C device parameter, the control module 50 enters a standby mode.

Steps S580-S582: When the 3C device 300 is determined to be the 3C charging device 320, output a permitting command to connect the electrical pathway of the cell set 10 and the second interface 20. and proceed to step S583.

Steps S583-S584: Detect a first charging current I_{special} of the charging device 220, i.e., the special charger 220, for the cell set, and detect a charging current I_{3C} of the 3C charging device 320 for charging the cell set 10, and compare a sum of the charging current I_{special} of the charging device 220, i.e., the special charger 220, and the charging current I_{3C} of the 3C charging device 320 with a pre-stored maximum permissible charging current I_{MAX}, and control the operation of the second interface 30 according to the comparison result, and proceed to step S586/S588.

Step S586: If the sum of the charging currents I_{special} + I_{3C} is not higher than the maximum permissible charging current I_{MAX}, output a permitting instruction, and control to permit the second interface 30 to accept charging from the 3C charging device.

Step S588: If the sum of the charging currents I_{special} + I_{3C} is greater than the maximum permissible charging current I_{MAX}, output a prohibiting command, and control to prohibit the second interface 30 from accepting charging from the 3C charging device.

The technical features of the above embodiments can be combined arbitrarily. In order to make the description concise, not all possible combinations of the technical features in the above embodiments are described. However, all the combinations of the technical features should be considered as falling within the scope described in this specification provided that they do not conflict with each other.

The foregoing embodiments only describe several implementation modes of the present disclosure, and the description is specific and detailed, but cannot therefore be understood as a limitation to the patent scope of the present disclosure. It should be noted that, a person of ordinary skill in the art may further make some variants and improvements without departing from the concept of the present disclosure, and these variants and improvements fall within the protection scope of the present disclosure. Therefore, the protection scope of the patent of the present disclosure shall be subject to the appended claims.

## Claims

1. A battery pack, comprising
a cell set;
a first interface, configured to be detachably connectable to an electrical device;
a second interface, configured to be detachably connectable to a 3C device; and
a switch module, electrically connected between the cell set and the second interface of the battery pack;
further comprising a control module, wherein the control module is configured to,
detect an electrical device parameter of the electrical device connected to the first interface, and detect a 3C device parameter of the 3C device connected to the second interface;
control the operation of the first interface according to the electrical device parameter, and control to permit the operation of the second interface according to the electrical device parameter and/or the 3C device parameter; wherein
the control module controls the switch module to permit the operation of the second interface.

2. The battery pack according to claim 1, wherein
the switch module comprises a first switch module, the first switch module comprises a switch element and a switch driving circuit; the switch driving circuit is electrically connected between the control module and the switch element, and the control module controls the switch driving circuit to drive the conducting of the switch element to permit the operation of the second interface.

3. The battery pack according to claim 1, wherein
the control module is configured to determine a device type of the electrical device according to the electrical device parameter, and the electrical device comprises a power device and a charging device in terms of the device type;
when the control module determines that the electrical device is the power device, the control module controls the cell set to supply power to the power device through the first interface; and
when the control module determines that the electrical device is the charging device, the control module controls to charge the cell set by the charging device through the first interface.

4. The battery pack according to claim 3, wherein
the power device comprises a high-power power device and a low-power power device; and
the control module is further configured as,
when the control module determines that the power device is the high-power power device, the control module controls the switch module to prohibit the operation of the second interface; and
when the control module determines that the power device is the low-power power device or the charging device, the control module controls the switch module to permit the operation of the second interface.

5. The battery pack according to claim 3, wherein
the control module is further configured to determine a device type of the 3C device according to the 3C device parameter, and the 3C device at least comprises a 3C load device and a 3C charging device in terms of the device type.

6. The battery pack according to claims 4 and 5, wherein
when the control module determines that the electrical device is the low-power power device,
and when the control module determines that the 3C device is the 3C load device, the control module controls the switch module to permit the cell set to supply power to the 3C load device through the second interface; and
when the control module determines that the 3C device is the 3C charging device, the control module controls the switch module to permit to charge the cell set by the 3C charging device through the second interface.

7. The battery pack according to claims 4 and 5, wherein
when the control module determines that the electrical device is the charging device,
and when the control module determines that the 3C device is the 3C load device, the control module controls the switch module to permit the cell set to supply power to the 3C load device through the second interface.

8. The battery pack according to claims 4 and 5, wherein
when the control module determines that the 3C device is the 3C charging device, the control module is configured to:
detect a first charging current for the cell set from the charging device connected to the first interface, and a second charging current for the cell set from the 3C charging device connected to the second interface;
when the control module determines that a sum of the first charging current and the second charging current is higher than a maximum charging current threshold of the cell set, the control module controls to interrupt the switch module to prohibit the 3C charging device from charging the cell set through the second interface; and
when the control module determines that the sum of the first charging current and the second charging current is not higher than the maximum charging current threshold of the cell set, the control module controls to conduct the switch module to permit the 3C charging device to charge the cell set through the second interface.

9. The battery pack according to claim 4, wherein the electrical device parameter at least comprise a parameter characterizing the type of the electrical device, and the parameter characterizing the type of the electrical device at least comprise terminal setting parameter, device type, voltage, current, temperature, power, and change rate of electrical parameter.

10. The battery pack according to claim 9, wherein
the control module determines the device type of the electrical device according to the parameter characterizing the type of the electrical device; and
when the control module determines that the electrical device is the power device, the control module is configured to determine that the power device is the high-power power device when at least one parameter of the electrical device parameter is determined to be not less than a preset threshold.

11. The battery pack according to claim 1, wherein
the first interface comprises power supply terminals and at least one communication terminal, and the communication terminal is used for communication between the control module and the electrical device.

12. The battery pack according to claim 11, wherein
the battery pack communicates with the electrical device by means of digital communication and/or analog communication.

13. The battery pack according to claim 1, wherein
the battery pack further comprises a second interface control circuit, the second interface control circuit is connected in series between the control module and the second interface, and the second interface control circuit detects the 3C device parameter of the 3C device connected to the second interface and transmits the 3C device parameter to the control module, or receives a control signal of the control module to control charging and discharging of the second interface.

14. The battery pack according to claim 13, wherein
the switch module further comprises a second switch module, and the second switch module is electrically connected between the second interface control circuit and the second interface, and configured to receive a control signal of the second interface control circuit to control the operation of the second interface.

15. The battery pack according to claim 1, wherein
the second interface is a USB Type-C interface, and the second interface control circuit communicates with the control module by means of UATR or I2C.

16. A charging and discharging control method of a battery pack, the battery pack comprising: a cell set; a first interface, configured to be detachably connectable to an electrical device; a second interface, configured to be detachably connectable to a 3C device; and a switch module, electrically connected between the cell set and the second interface of the battery pack; wherein the method comprises the following steps:
detecting an electrical device parameter of the electrical device connected to the first interface;
detecting a 3C device parameter of the 3C device connected to the second interface;
controlling the operation of the first interface according to the electrical device parameter; and
controlling the switch module to select to permit the operation of the second interface according to the electrical device parameter and/or the 3C device parameter.

17. The charging and discharging control method according to claim 16, wherein the step of controlling the operation of the first interface according to the electrical device parameter comprises:
determining a device type of the electrical device according to the electrical device parameter, wherein the electrical device comprises a power device and a charging device in terms of the device type;
when the electrical device is determined to be the power device, controlling the cell set to supply power to the power device through the first interface; and
when the electrical device is determined to be the charging device, controlling to charge the cell set by the charging device through the first interface.

18. The charging and discharging control method of a battery pack according to claim 17, wherein the power device comprises a high-power power device and a low-power power device; and the step of controlling the operation of the first interface according to the electrical device parameter further comprises:
When the electrical device is determined to be the high-power power device according to the electrical device parameter,
interrupting the switch module to prohibit the operation of the second interface; and
when the electrical device is determined to be the low-power power device or the charging device, conducting the switch module to permit the operation of the second interface.

19. The charging and discharging control method according to claim 16, wherein the control method further comprises:
determining a device type of the 3C device according to the 3C device parameter; and the 3C device at least comprises a 3C load device and a 3C charging device in terms of the device type.

20. The charging and discharging control method according to claims 18 and 19, wherein the step of controlling the switch module to select to permit the operation of the second interface according to the electrical device parameter and/or the 3C device parameter comprises:
when the electrical device is determined to be the low-power power device, and
when the 3C device is determined to be the 3C load device, conducting the switch module to permit the cell set to supply power to the 3C load device through the second interface; and
when the 3C device is determined to be the 3C charging device, conducting the switch module to permit to charge the cell set by the 3C charging device through the second interface.

21. The charging and discharging control method according to claims 18 and 19, wherein the step of controlling the switch module to select to permit the operation of the second interface according to the electrical device parameter and/or the 3C device parameter comprises:
when the electrical device is determined to be the charging device, and
when the 3C device is determined to be the 3C load device, conducting the switch module to permit the cell set to supply power to the 3C load device through the second interface.

22. The charging and discharging control method according to claims 18 and 19, wherein the step of controlling the switch module to select to permit the operation of the second interface according to the electrical device parameters and/or the 3C device parameters comprises:
when the electrical device is determined to be the charging device, and
when the 3C device is determined to be a 3C charger according to the 3C device parameters,
detecting a first charging current for the cell set from the charging device connected to the first interface, and a second charging current for the cell set from the 3C charging device connected to the second interface;
when a sum of the first charging current and the second charging current is determined to be higher than a maximum charging current threshold of the cell set, interrupting the switch module to prohibit the 3C charging device from charging the cell set through the second interface; and
when the sum of the first charging current and the second charging current is determined to be not higher than the maximum charging current threshold of the cell set, conducting the switch module to permit the 3C charging device to charge the cell set through the second interface.

23. The charging and discharging control method according to claim 18, wherein
the electrical device parameter at least comprise a parameter characterizing the type of the electrical device, and the parameter characterizing the type of the electrical device at least comprise terminal setting parameter, device type, voltage, current, temperature, power, and change rate of electrical parameter.

24. The charging and discharging control method according to claim 23, wherein the charging and discharging control method further comprises:
determining the device type of the electrical device according to the parameter characterizing the type of the electrical device; and
when the electrical device is determined to be the power device,
when at least one parameter of the electrical device parameter is not less than a preset threshold, determining that the power device is the high-power power device.

25. The charging and discharging control method according to claim 16, wherein before the step of detecting electrical device parameters of the first interface and/or detecting 3C device parameters of the 3C device at the second interface, the charging and discharging control method further comprises:
detecting a connecting state of the first interface and/or the second interface, and if it is determined that a device is connected to the first interface and/or the second interface, acquiring the corresponding electrical device parameters and/or 3C device parameters of the device connected to the first interface and/or the second interface.
